# EUROPÄISCHE PATENTSCHRIFT

(11) **EP 1 347 284 B1**
(45) Veröffentlichungstag und Bekanntmachung des Hinweises auf die Patenterteilung: **09.01.2008**
(21) Anmeldenummer: 02006113.1
(22) Anmeldetag: 18.03.2002
(51) Int. Cl.: G01N 21/77, G02B 6/10, G02B 6/32

(54) **Probenträger mit integrierter Optik**
Sample holder with integrated optics
Porte-échantillon avec optique intégrée

(43) Veröffentlichungstag der Anmeldung: 24.09.2003
(73) Patentinhaber: ibidi GmbH, 80799 München (DE)
(72) Erfinder: Kahl, Valentin Dr., 80636 München (DE)
(74) Vertreter: Grünecker, Kinkeldey, Stockmair & Schwanhäusser Anwaltssozietät

(56) Entgegenhaltungen:
- EP-A- 0 706 646
- EP-A- 1 120 643
- DE-A- 3 915 920
- US-A- 5 455 178
- WOLFBEIS O S: "Capillary waveguide sensors" TRAC, TRENDS IN ANALYTICAL CHEMISTRY, ANALYTICAL CHEMISTRY. CAMBRIDGE, GB, Bd. 15, Nr. 6, 7. Juni 1996 (1996-06-07), Seiten 225-232, XP004034769 ISSN: 0165-9936
- MAIMS C ET AL: "Grating coupled leaky waveguide micro channel sensor chips for optical analysis" SENSORS AND ACTUATORS B, ELSEVIER SEQUOIA S.A., LAUSANNE, CH, Bd. 77, Nr. 3, 10. Juli 2001 (2001-07-10), Seiten 671-678, XP004250724 ISSN: 0925-4005

## Beschreibung

### Gebiet der Erfindung

Die vorliegende Erfindung betrifft einen Probenträger für optische Untersuchungen, insbesondere für mikroskopische und spektroskopische Untersuchungen sowie in Flüssigkeit gelöste oder an einer Oberfläche immobilisierte Proben.
Ein derartiger Probenträger wird z. B. für die quantitative Beleuchtung von Proben oder Grenzflächen verwendet, um etwa eine Untersuchung von Fluoreszenzsignalen, optischen Dichten von Flüssigkeiten oder der chemischen Aktivierung von Oberflächen (Fotoreaktionen) durchzuführen. Dabei sind insbesondere biologische Proben, wie Proteine, DNA-, RNA-Makromoleküle, DNA- und RNA-Oligomere und Lipidmembranen von Interesse, die zur Untersuchung in Flüssigkeit gelöst vorliegen können oder an aktivierten Oberflächen gebunden werden.

### Stand der Technik

In der Molekularbiologie, der Gentechnik und der Medizin werden optische Betrachtungen von Fluoreszenzsignalen häufig eingesetzt, um biologische Makromoleküle sichtbar zu machen und insbesondere dadurch spezifische Reaktionen mit Reaktionspartnern nachzuweisen. Beobachtungen von biologisch relevanten Molekülen bzw. Zellen setzt i.a. eine wässrige Umgebung voraus. Diese Umgebungsbedingungen werden meist dadurch hergestellt, dass die Probe auf bzw. in einen Probenträger gebracht wird, der in der Lage ist, eine genügend große Menge des wässrigen Mediums aufzunehmen. Es handelt sich dabei z. B. um einfache Deckgläser, Glaskammern, Petrischalen oder Titterplatten. Als Träger zur Untersuchung und Analyse von Proben mit Lichtmikroskopie, insbesondere Fluoreszenzanalyse sind zahlreiche Formen bekannt. l.a. müssen bei der Untersuchung die von der Probe kommenden Fluoreszenzsignale eine Komponente des Trägers durchdringen, bevor sie analysiert werden. Dies führt wegen der hohen Empfindlichkeit der meisten Untersuchungsverfahren gegenüber Hintergrundsignalen (Rauschen) zu hohen Anforderungen an das Trägermaterial bzgl. der optischen Eigenschaften (Transmission, Doppelbrechung, Eigenfluoreszenz).

Eine einfache klassische Form eines Probenträgers ist aus der US 26 77 647 bekannt. Dort ist ein Tascheninkubator gezeigt, der als ein flacher abgedeckter Behälter aus durchsichtigem Material ausgebildet ist. Er ist hermetisch verschließbar und für UV-Licht undurchlässig. Außerdem ist er für mikroskopische Untersuchungen geeignet, ohne dass er zwischen dem Ansetzen der Probe und dem Mikroskopieren geöffnet werden müsste. Über den Verlauf des Strahlengangs des Lichtes im Tascheninkubator oder eine Nutzung der Geometrie des Tascheninkubartors zur Strahlführung wird jedoch nichts beschrieben.

Zur optischen Untersuchung der Proben sind bereits zahlreiche Verfahren bekannt, die sich die Fluoreszenz zu Nutze machen. Dabei wird grundsätzlich die Probe mit Hilfe des Probenträgers in einen Lichtstrahl einer Lichtquelle eingebracht und der von der Probe kommende Lichtstrahl durch einen Detektor gemessen.

Zur Erzeugung eines Lichtstrahl mit bestimmter Wellenlänge oder zur Monochromatisierung des Lichtstrahl sind hierbei zwei Verfahren sind üblich. Erstens kann man durch einen Bandpassfilter einen engen Wellenlängenbereich aus einem nahezu weißen Lichtspektrum z.B. von einer Quecksilberdampflampe auswählen, oder zweitens kann man durch einen Laser erzeugtes Licht verwenden, das von sich aus nur eine bestimmte Wellenlänge besitzt.

Zur Messung des Fluoreszenzsignals wird entweder durch einen Band- oder Langpassfilter der Wellenlängenbereich herausgefiltert, der nicht genau der Emissionslinie des Fluoreszenzfarbstoffes entspricht, und die durch den Filter dringende Leuchtintensität analysiert, oder es wird alternativ ein energiesensitiver, z.B. ein farbsensitiver Detektor verwendet.

Die meisten Verfahren, welche die Fluoreszenz ausnutzen, beruhen auf Mikroskopie oder Spektroskopie. Fluoreszenzmikroskope sind dadurch gekennzeichnet, dass Anregungs- und Emissionsfilter als optische Komponenten im Strahlengang auswechselbar angebracht sind. Das primäre Anregungslicht ist in diesem Fall praktisch weiß.

Aktuell kommerziell erhältliche Modelle sind z.B. Zeiss Axiovert 200 (Carl Zeiss), bzw. Leica DM IRE2 (Leica Microsystems). In einem derartigen Mikroskop wird der zur Anregung benötigte Strahl durch optische Komponenten auf die zu untersuchende Fläche oder Probe fokussiert. Dies kann z. B. durch einen zwischen Probe und Lichtquelle montierten Kondensor oder durch Verwendung des Objektivs als Kondensor erfolgen.

Ein großer Nachteil bei der Verwendung der im obigen Absatz beschriebenen Mikroskope ist der hohe Instandhaltungsaufwand der Beleuchtungseinheit, da die verwendeten Quecksilberdampflampen nach je 100-300 Betriebsstunden ausgetauscht werden müssen. Außerdem sind für eine ausreichende optische Qualität sehr teure optische Komponenten nötig, wie z.B. Objektive, Spiegel, Präzisionslinsen etc. Ein weiteres Problem ist die homogene Ausleuchtung eines Volumens oder einer Oberfläche. Die Quecksilberdampflampen müssen dazu speziell justiert werden, und ein Laserstrahl muß dementsprechend mit Hilfe mehrerer optischer Komponenten aufgeweitet oder fokussiert werden.

Neben Fluoreszenzmikroskopen werden für die Fluoreszenzmikroskopie sogenannte "Laser Scanning Mikroskope" für ein Laserrasterverfahren verwendet, die sich dadurch auszeichnen, dass nicht das gesamte Gesichtsfeld auf der Probe homogen ausgeleuchtet wird, sondern dass die Probe mit einem punktförmigen Laserstrahl abgerastert wird. Dies hat einerseits den Vorteil gegenüber herkömmlichen Mikroskopen, dass die Beleuchtungseinheit, d.h. der Laser, im Gegensatz zu Quecksilberdampflampen mit kontinuierlichem Spektrum deutlich geringeren Instandshaltungaufwand erfordert. Andererseits besteht in diesem Fall die Detektionseinheit aus einem punktförmigen Lichtsensor, der in Verbindung mit entsprechend im Strahlengang angeordneten Lochblenden die Ortsauflösung erzielt. Zum Abrastern der Probe werden der Laserstrahl für die Beleuchtung und der Beobachtungsstrahlengang mit Hilfe beweglicher optischer Komponenten kontrolliert. Darüber hinaus kann mit dem Laserrasterverfahren in Verbindung mit geeigneten optischen Komponenten die sogenannte konfokale Mikroskopie durchführt werden, mit der dreidimensionale Informationen aus der Probe gewonnen werden können.

Ein Nachteil des Rasterverfahrens ist der Einsatz von mechanischen beweglichen Teilen, die auf Grund der für die Untersuchung notwendigen Präzision sehr kostspielig sind und hohem mechanischem Verschleiß unterliegen.

Nach dem Stand der Technik werden herkömmliche Mikroskope und Rasterverfahren für Fluoreszenzmikroskopie durch Systeme mit optisch festangeordneten Komponenten ergänzt, wodurch aus Kostengründen teilweise auf mechanisch bewegliche Bauteile und teure optische Komponenten verzichtet werden kann. Beispielsweise kann als Lichtquelle ein Halbleiterlaser und ein punktförmiger Lichtdetektor verwendet werden.

Ein weiteres Verfahren, bei dem Fuoreszenzsignale oder die Analyse von Absorption zur Moleküldetektion eingesetzt werden, ist der sogenannte ELISA-Test. Bei bestimmten biologischen Reaktionen entstehen Fluoreszensignale oder es erfolgt eine Absorption von Licht. Ein Nachweis dieser Reaktionen ist mit sogenannten Multititterplatten möglich. Dazu werden spezielle spezifische Reaktionen zwischen Antikörper und Antigenen ausgenutzt. Am Ende dieser Reaktionskaskaden (in der Regel fünf aufeinanderfolgende Schritte) wird ein Molekül freigesetzt, welches entweder fluoresziert oder die optische Dichte der Lösung verändert. Die Konzentrationsbestimmung dieser in Lösung frei beweglichen Moleküle gibt somit Aufschluß über das Vorhandensein oder die Konzentration eines bestimmten Moleküls. Der ELISA-Test dauert 2-4 Stunden und benötigt eine im Vergleich mit anderen Verfahren große Menge an Analysematerial.

Bei vielen Anwendungen ist es das Ziel, ausschließlich Fluoreszenzsignale zu beobachten, die von an Oberflächen immobilisierten Molekülen stammen. Dies hat den Vorteil, dass weniger Probensubstanz benötigt wird. Beispiele hierfür sind an Oberflächen angebundene DNA-Oligomere, an denen Hybridisierungstest durchgeführt werden, um bestimmte DNA-Basen-Sequenzen nachzuweisen. Bei der Benutzung von herkömmlicher Fluoreszenzmikroskopie wird das gesamte Probenvolumen mit dem Anregungslicht bestrahlt. Dies führt insbesondere bei der Beobachtung der Fluoreszenzsignale von an Oberflächen gebundenen Fluoreszenzfarbstoffen zu Hintergrundrauschen, das von im Wasserüberstand gelösten Fluoreszenzfarbstoffen stammt. Dies ist i.a. der bedeutendste Beitrag zur Verringerung des Signal-zu-Rauschen-Verhältnisses. Nach dem Stand der Technik wird zur selektiven Beleuchtung von dünnen Schichten konfokale Mikroskopie und Zweiphotonenmikroskopie eingesetzt, was jedoch mit extrem hohen Kosten verbunden ist.

Eine weitere Methode zur Anregung von an Oberflächen gebunden Fluoreszenzmolekülen ist die sogenannte ,Total Internal Reflection Fluorescence Microscopy', auch TIRF genannt. Bei dieser Methode wird ausgenutzt, dass Licht in einen optisch dichten Probenträger mit hohem Brechungsindex derart eingekoppelt werden kann, dass der Probenträger als Lichtleiter fungiert. Das Licht wird somit an der Grenzfläche Probenträger/Probenflüssigkeit, bzw. Probenträger/Luft total reflektiert. Bei Totalreflexion von Licht wird ein sogenanntes evaneszentes Feld erzeugt. Dieses Feld dringt exponentiell abfallend in die Probe ein und hat eine wellenlängenabhängige mittlere Eindringtiefe von 250-700 nm. Aufgrund der endlichen Eindringtiefe in die Probenflüssigkeit können nur Fluoreszenzfarbstoffe nahe der Trägeroberfläche angeregt werden. Die Methode ist deshalb besonders gut geeignet, um molekulare und zelluläre Phänomene an der flüssig/fest Grenzfläche zu untersuchen.

Von besonderer Bedeutung sind dabei die Verhältnisse der Brechungsindizes des Probenträgers, der Probenlösung und bei Verwendung von hochauflösender Mikroskopie der Immersionslösungen auf den Objektiven. Der Probenträger muss aus optisch hochtransparenten Materialien sein. Aus diesem Grund wird als Probenträger fast ausschließlich Glas verwendet. Das verwendete Licht wird meistens mit einem Laser erzeugt. Von besonderer Bedeutung ist hier, wie bei allen Lichtleitersystemen, das geeignete Einkoppeln des Lichtes zur Anregung der Fluoreszenzmoleküle. Der Laserstrahl muss über einen aus mehreren optischen Komponenten (Spiegel, Linsen, etc.) bestehenden Strahlengang fokussiert werden, bevor er eingekoppelt werden kann. Die eigentliche Einkopplung erfolgt über ein makroskopisches Prisma, typischerweise mit einer Kantenlänge von 20mm. Das Prisma ist in der Regel im 45°-Winkel zum Probenträger gedreht und verfügt über eine hochpolierte plane Oberfläche. Der Laserstrahl wird über Spiegel so auf die Prismenoberfläche fokussiert, dass der gebrochene Strahl im unterliegenden Probenträger totalreflektiert wird. Die Verbindung zwischen dem Prisma und dem Probenträger wird dabei durch spezielles Immersionsöl bewerkstelligt.

Nachteil dieser Methode ist, dass das Prisma auf den Probenträger aufgebracht werden muß. Durch die Verwendung des Immersionsöls, um das Prisma mit dem Träger optisch zu verbinden, entsteht die Gefahr der Verunreinigung der Probe. Auch muß, wegen der von Experiment zu Experiment leicht unterschiedlichen Position der Probe im Verhältnis zum eingekoppelten Strahl, der Strahl neu fokussiert werden. Dadurch wird der quantitative Vergleich zwischen zwei Proben erschwert. Aufgrund des Strahldurchmessers und der scharfen Kanten des Prismas ist es mit dieser Methode auch nicht möglich, in sehr dünne Probenträger einen Strahl vollkommen einzukoppeln. Ein Teil des Lichtstrahles wird dadurch gestreut.

Der Vorteil, dass das evaneszente Feld nur nah an der Oberfläche gebundene Moleküle beleuchtet, führt andererseits zu dem Nachteil, dass Moleküle, die an der Oberfläche immobilisiert sind, jedoch weit von der Oberfläche entfernt sind (z.B. durch Polymerketten gebunden), nicht gut detektiert werden können. Auch ist bei dem TIRF-Verfahren die homogene Ausleuchtung einer Oberfläche nicht gewährleistet, da nur bestimmte Stellen der Träger an der Oberfläche beleuchtet werden und je nach Absorption im Trägermedium oder an der Grenzfläche die Lichtintensität im Träger abnimmt.

Die Ausnutzung der Evaneszentfeldanregung zur Beleuchtung von oberflächennahen Bereichen, insbesondere in Kombination mit Biosensoren gehört bereits zum Stand der Technik. Eine generelle Übersicht ist von Axelrod in dem Journal of Microscopy, Vol. 129, Seiten 19-28 "Total internal reflection fluorescence microscopy" (1983) gegeben. Die Verwendung des evaneszenten Feldes für Fluoreszenzimmunotests ist z.B. in WO 94/27137 von R.A. Badlay et al. beschrieben. Die bekannten Lösungen haben jedoch den generell den Nachteil, dass ein spezieller Aufbau nötig ist, um das Licht entsprechend zu modulieren, um in den Träger bzw. Biosensor geeignet eingekoppelt zu werden.

In WO90/05295 ist ebenfalls ein optisches Biosensorsystem beschrieben. Auch bei diesem System muß eine aufwendige Optik aus verschiedenen optischen Komponenten verwendet werden, um bestimmte Bereiche im Biosensor zu beleuchten. Dabei ist der Biosensor bzw. Träger durch ein aufwendiges Kanalsystem realisiert, durch das mittels Ventilen und Pumpen die zu untersuchende Flüssigkeit geführt wird.

In der DE 197 11 281 C1 ist ebenfalls eine Vorrichtung und ein Verfahren zur Durchführung von Fluoreszensimmunotests beschrieben, bei dem ein evaneszentes Feld verwendet wird. Dabei wird eine funktionelle Schicht in die Nähe einer optisch durchsichtigen Platte gebracht, in welche Licht unter Totalreflektion eingekoppelt ist. Die funktionelle Schicht wird so nah an die Platte gebracht, dass sie durch das aus der Bodenplatte austretende evaneszente Feld beleuchtet wird. Das emittierte Licht wird von einer photosensitiven Deckplatte aufgenommen. Über die Einkopplung des Lichtes in die Platte und das Verhalten des Strahlenganges in der Platte wird nichts berichtet.

Die optische Dichte (Absorption) von an Oberflächen gebundenen Molekülen kann durch eine Weiterentwicklung der TIRF-Methode, der sogenannten ATR-Methode (Abgeschwächte-Total-Reflexion) bestimmten werden. Hier wird die Absorption des evaneszenten Feldes in einer oberflächenahen Probe bestimmt. Normalerweise wird dabei im IR-Wellenlängenbereich gemessen und ein Si-Kristall oder Calcium-Fluorid (hoher Brechungsindex und für IR transparent) als Probenträger bzw. Wellenleiter verwendet. Mit diesem Verfahren kann besonders gut überprüft werden, ob eine Oberfläche mit einem optisch von Wasser unterscheidbaren Material beschichtet ist. Dabei wird die Intensität der Lichtwellen vor und nach dem Durchgang durch den Probenträger bestimmt.

Chemische Bindungen an Oberflächen können durch sogenannte Fotoreaktionen lokal aktiviert werden. Dabei wird ein Lichtimpuls auf eine bestimmte Stelle eines Trägers gegeben, welche meistens ein freies Radikal erzeugt. Dies wird standardmäßig auf den verschiedensten Oberflächen durchgeführt. An diese aktivierten Oberflächen können Moleküle spezifisch gebunden werden. Problematisch ist die Fotoaktivierung jedoch in geschlossenen Reservoirs, wie z.B. Kanälen, da der Lichtimpuls dazu zuerst das Material durchdringen muss und dabei das gesamte Material schädigt oder stark absorbiert wird.

Als Trägermaterial wird bevorzugt Glas verwendet, insbesondere bei den Fluoreszenztechniken, bei welchen optisch gute Resultate erzielt werden sollen. Besonders bei den TIRF-Verfahren ist zusätzlich ein hoher Brechungsindex notwendig. Glas besitzt hervorragende optische Eigenschaften, wie z.B. extrem hohe Transparenz für sichtbares Licht, keine Doppelbrechung und bei entsprechender Verarbeitung optisch glatte Oberflächen

Glas hat jedoch den Nachteil, dass die Verarbeitung zu komplexen Formen (wie Kanälen, Reservoirs) äußerst kostspielig ist, so dass die zu verwendenden Träger meist mehrfach verwendet werden. l.a. ist die Reinigung und Sterilisation von Glaskomponenten, die durch biologische Materialien, wie z.B. Proteinen, Bakterien oder Blut verschmutzt sind, sehr aufwendig. Zusätzliche Schwierigkeiten bei Reinigungsschritten treten dann auf, wenn in den Träger gegenüber mechanischer und chemischer Einwirkung empfindliche Mikrostrukturen eingebracht sind. Bei der Einkopplung von Licht, wie bei dem TIRF-Verfahren, kommt hinzu, dass speziell polierte Glasoberflächen extrem teuer und anfällig sind.

Bei Verwendung von Standard-Probenträgern müssen spezielle Prismen auf diesen aufgebracht und optisch verbunden werden. Bei Verwendung von Si-Kristallen oder Calcium-Fluorid müssen speziell angeschliffene Träger verwendet werden. Bei der Verwendung von Flusskammern müssen zusätzlich noch spezielle Dichtungen oder Deckgläser auf die Probenträger aufgebracht werden. Dadurch wird die praktische Verwendung sehr umständlich, was die Reproduzierbarkeit von Messungen beeinträchtigt.

Aus der EP 0 706 646 ist eine Vorrichtung zur Aufnahme einer Vielzahl von chemischen und/oder biologischen Proben bekannt, die mindestens einen mikromechanischen Probenträger mit einer Unterseite und einer dieser abgewandten Oberseite aufweist, in der eine Vielzahl von mit Böden versehenen Ausnehmungen vorgesehen ist. Eine Ausführungsform ist ein Probenträger mit einem halbseitig semitransparenten Siebboden, der über eine Hälfte seiner Fläche mit einer aufgesputterten Filterschicht für eine teilreflektierende Lichteinkopplung über den Boden ausgestattet ist.

Aus der EP 1 120 643 ist eine Anordnung zur Detektion von Fluoreszenzlicht mehrerer Probenpunkte bekannt, wobei die Probenpunkte auf einem Objektträger angeordnet sind. Die Anordnung umfasst eine Lichtquelle zum simultanen Beleuchten der Probenpunkte mit Anregungslicht.

Aus der US 5,455,178 ist ein mikrooptischer Sensor mit einem Wellenleiter zum Detektieren von chemischen Substanzen in einer Proben bekannt.

O.S. Wolfbeis, "Capillary waveguide sensors", Trends in Analytical Chemistry, vol. 15, 1996, Seite 225 bis 232, beschreibt optisch transparente Kapillaren, die als Wellenleiter ausgebildet sind.

Aus der WO98/22803 ist eine mikromechanische Transmissionszelle zur Bestimmung einer optischen Absorption eines Probenfluids bekannt. Die Zelle besteht aus einem Substrat, in das ein Behälter zum Halten des Probenfluids und eine Lichtdurchlassöffnung zum Einführen des Lichts in den Behälter eingeätzt sind. Ferner umfasst die Zelle eine Reflektoreinrichtung, die das Licht derart durch den Behälter führt, dass ein Großteil des Lichts den Behälter ohne Mehrfachreflektionen an einer Wand des Behälters durchläuft. Ein Ausführungsbeispiel ist eine Transmissionszelle, in dem die Reflektoreinrichtung als geneigte Wand des Probenfluidbehälters realisiert ist.

Es ist daher die Aufgabe der Erfindung, einen Probenträger für optische Untersuchungen bereitzustellen, durch den eine optische Untersuchung vereinfacht wird, der zuverlässig reproduzierbare Messungen erlaubt, kostengünstig in der Herstellung ist und eine Handhabung der Probe und des Trägers erleichtert .

### Beschreibung der Erfindung

Diese Aufgabe wird durch einen Probenträger nach Anspruch 1 gelöst.

Durch in den Probenträger integrierte optische Komponenten kann bei einer Untersuchung das Licht mit Hilfe des Probenträgers geführt oder moduliert werden. So können auf einfache Weise einfallende Strahlengänge im und am Träger realisiert werden. (Unter einem Lichtstrahl werden dabei hier und im folgenden sowohl kontinuierliche Lichtstrahlen als auch Lichtblitze verstanden.) Externe optische Komponenten zwischen der Lichtquelle und dem Probenträger können eingespart werden. Durch Probenträger mit verschiedenen integrierten optischen Komponenten, können verschiedene Anforderungen an die Lichtführung erfüllt werden. Z. B. wird eine homogene Ausleuchtung der Probenoberfläche oder des Probenvolumens wesentlich erleichtert. Die billige Herstellungsweise eines solchen Probenträgers als Massenartikel macht eine aufwendige Reinigung des Trägers überflüssig. Vorzugsweise kann somit der Probenträger als Einwegprodukt hergestellt werden.

In vorteilhafter Weise kann auch eine Vorrichtung bereitgestellt werden, die einen erfindungsgemäßen Probenträger, eine Lichtquelle und einen Detektor umfasst. Damit können die Vorteile der Integration der optischen Komponenten in den Probenträger ausgenützt werden, ohne teure Geräte, wie herkömmliche Mikroskope oder Spektrometer verwenden zu müssen. Mit der Vorrichtung können verschiedenste Messgrößen einer Probe durch die Anwendung verschiedener oben beschriebener Untersuchungsmethoden schnell und zuverlässig durchgeführt werden. Die Vorrichtung kann die elektronisch aktiven Komponenten für die optische Untersuchung zur Verfügung stellen, wie z.B. einen Laser als Lichtquelle und einen empfindlichen Lichtsensor, und ist vorzugsweise speziell auf den Probenträger abgestimmt. Aufgrund der in dem Probenträger integrierten optischen Komponenten enthält die Vorrichtung wenige bewegliche Komponenten, was die Abnutzungserscheinungen im Gerät minimiert oder ausschließt.

Mit Hilfe der vorliegenden Erfindung können optische Untersuchungen von Proben, wie sie eingangs beschrieben wurden, wesentlich erleichtert werden und sind weniger zeitaufwendig. Zudem kann bei einer Vorrichtung für derartige Untersuchungen auf eine beachtliche Anzahl an Bauteilen verzichtet werden. Dadurch wird eine Untersuchung einer Probe nicht nur kostengünstiger, sondern auch weniger anfällig für Fehler bei der Durchführung und für einen Verschleiß der verwendeten Geräte. Letztlich wird eine genaue Wiederholung einer Untersuchung vereinfacht, so dass exakte und zuverlässige Ergebnisse erzielt werden können. Auch kann auf einfache Weise auf die unterschiedlichen Anforderungen an die Beleuchtung einer Probe bei den verschiedenen Untersuchungsmethoden eingegangen werden.

Mit dem erfindungsgemäßen Probenträger kann in vorteilhafter Weise eine optische Untersuchung wenigstens einer Probe durchgeführt werden. Bei diesem Verfahren wird der Lichtstrahl durch wenigstens eine in den Probenträger integrierte optische Komponente geführt, moduliert und/oder auf die Probenaufnahme geführt. Alternativ oder zusätzlich kann ein Lichtstrahl durch eine als Kanal ausgebildete Aufnahmeeinrichtung in dem Probenträger auf die Probe gerichtet und mittels an den Kanal angrenzende Bereiche des Probenträgers durch den Kanal geleitet werden, wobei diese Bereiche als integrierte optische Komponenten ausgebildet sind.

Bei einer vorteilhaften Untersuchung von Proben mit dem erfindungsgemäßen Probenträger kann ein Lichtstrahl mit Hilfe der integrierten optischen Komponenten des Probenträgers geführt werden. Ein zeitraubendes Justieren von externen optischen Komponenten ist daher nicht notwendig. Dadurch kann die Untersuchung schnell und effizient durchgeführt werden. Dies ist besonders vorteilhaft, wenn verschiedenartige Proben oder verschiedene Untersuchungsmethoden innerhalb kurzer Zeit nacheinander erfolgen sollen.

Durch geeignete Wahl der Neigung des ebenen Bereichs einer Seitenfläche bzw. des entsprechenden Normalenvektors kann ein Lichtstrahl in einem gewünschten Winkel in den Probenträger eingekoppelt werden. Wenn die Flächen des Probenträgers verschiedene Winkel zum einfallenden Lichtstrahl aufweisen, können je nach Position der Lichtquelle auf diese Weise verschiedene Punkte an der Trägeroberfläche beleuchtet werden. Außerdem kann durch benachbarte Bereiche mit unterschiedlicher Neigung auch eine Strahlteilung des einfallenden Strahls erreicht werden. Auch können planare Flächen eines ursprünglich erforderlichen Prismas durch eine Krümmung mit definiertem Radius an dem Probenträger ersetzt werden. Bei einer positiven Krümmung wird dadurch ein auf diese gekrümmte Fläche parallel einfallender Lichtstrahl auf eine bestimmte Stelle im Träger fokussiert. Idealerweise ist dies ein Punkt auf der zu untersuchenden Fläche. Bei einer negativen Krümmung kann dadurch z. B. ein Laserstrahl aufgeweitet werden, so dass bei entsprechender Geometrie eine größere Fläche auf der Untersuchungsfläche beleuchtet wird.

Eine solche Aufweitung des Lichtstrahls kann auch durch eine Aufrauhung als integrierte optische Komponente an der Stelle der Probenaufnahme erzeugt werden, an der das Licht in die Aufnahme eintritt. Ein weitere Möglichkeit, den Lichtstrahl aufzuweiten, besteht in einem Einkopplungswinkel, der wesentlich flacher ist als 29°. Dadurch wird der zuerst runde Lichtstrahl ellipsoid auf der zu untersuchenden Oberfläche abgebildet.

Es kann auch eine linienförmige Lichtquelle verwendet werden, um die gesamte Seitenlänge homogen auszuleuchten. Hierfür kann beispielsweise ein Linienlaser verwendet werden.

Vorzugsweise kann eine der wenigstens einen in den Probenträger integrierten optischen Komponente als Linse, Prisma, Spiegel, Polarisator, Blende, Strahlteiler, Lichtfilter oder Lichtleiter ausgebildet sein.

Gemäß einer vorteilhaften Weiterbildung aller zuvor beschriebenen Probenträger kann eine der wenigstens einen integrierten optischen Komponente durch eine Wölbung der Oberfläche ausgebildet sein. Bei diesen Wölbungen kann es sich um Aus- oder Einwölbungen handeln. Somit können in vorteilhafter Weise Linsen als integrierte optische Komponenten ausgebildet werden.

Außerdem können die integrierten optischen Komponenten in dem Probenträger durch hochpolierte Flächen, Schrägen (Prismen), farbige Materialien (optische Filter), Polarisatoren (z. B. polarisierende Kunststoffe) und/oder durch die Ausnutzung der Totalreflektion an der Trägeroberfläche (Spiegel) ausgebildet werden. Dadurch werden z. B. die sonst nötigen Linsen und Spiegel, wie ein Kondensor zum homogenen Beleuchten der Probe, ersetzt.

Bevorzugt werden die integrierten optischen Komponenten durch die Geometrien der Oberflächen des Träges so gestaltet, dass durch das beleuchtende Licht ausgewählte Bereiche des Trägers oder der Trägeroberfläche, insbesondere der Aufnahmeeinrichtungsoberfläche homogen ausleuchtet werden. Auch ausgewählte Bereiche eines Flüssigkeitsvolumens oder -oberfläche in der Aufnahmeeinrichtung können dadurch homogen beleuchtet werden. Unterschiedliche Oberflächen oder Volumina können auf diese Weise mit der gleichen Lichtintensität beleuchtet werden. Dies soll unter anderem den quantitativen Vergleich von verschiedenen Proben ermöglichen.

Durch eine stufenförmige Ausgestaltung des Probenträger können auf einfache Art verschiedene Lichtstrahlen an verschiedenen Stellen des Probenträgers in gewünschter Weise eingekoppelt werden.

Vorzugsweise kann ein Lichtstrahl parallel zur Probenoberfläche in den Probenträger eingekoppelt werden. Dabei kann der Strahl direkt an der Grenzfläche zwischen der Trägeroberfläche und der Probe oder direkt über der Trägeroberfläche entlanggeführt werden.

Entsprechend einer vorteilhaften Weiterbildung aller zuvor beschriebenen Probenträger kann einer der wenigstens einen integrierten optischen Komponente als die wenigstens eine Aufnahmeeinrichtung ausgebildet sein. Wird eine solche Aufnahmeeinrichtung beispielsweise mit einer Flüssigkeit, in der die Probe gelöst ist, gefüllt, die einen höheren Brechungsindex als das umgebende Material des Probenträgers aufweist, kann ein Lichtstrahl in die Flüssigkeit eingekoppelt werden und durch Totalreflexionen an der Grenzfläche zwischen Flüssigkeit und Oberfläche der Aufnahmeeinrichtung geführt werden.

Gemäß einer bevorzugten Weiterbildung aller zuvor beschriebenen Probenträger kann eine der wenigstens einen Aufnahmeeinrichtung eine Verjüngung in Richtung der Grundfläche des Probenträgers aufweisen. Auf diese Weise kann eine besonders homogene Ausleuchtung der Aufnahmeeinrichtung erzielt werden. Die Verjüngung kann insbesondere derart ausgebildet sein, dass die Aufnahmeeinrichtung einen trapezförmigen Querschnitt aufweist.

Gemäß einer vorteilhaften Weiterbildung aller zuvor beschriebenen Probenträger kann eine der wenigstens einen Aufnahmeeinrichtung wenigstens einen fotoaktiven Bereich aufweisen. Ein solcher fotoaktiver Bereich kann beispielsweise durch an der Oberfläche der Aufnahmeeinrichtung gebundene fotoaktive Gruppen ausgebildet sein. Durch eine geeignete Lichtführung eines eingekoppelten Lichtstrahls kann ein fotoaktiver Bereich beleuchtet und somit aktiviert werden. Insbesondere kann ein Lichtstrahl direkt in eine in der Aufnahmeeinrichtung befindliche Flüssigkeit, in der die Probe gelöst ist, eingekoppelt werden. Durch Totalreflexionen an der Grenzfläche zwischen der Flüssigkeit und der Oberfläche der Aufnahmeeinrichtung kann der Lichtstrahl an die gewünschten fotoaktiven Bereiche geführt werden.

Vorteilhafterweise kann eine der wenigstens einen integrierten optischen Komponenten aller zuvor beschriebenen Probenträger mindestens zwei Materialien umfassen.

Vorzugsweise kann ein Trägermaterial und/oder ein Material einer der wenigstens einen integrierten optischen Komponente aller zuvor beschriebenen Probenträger einen optisch hochwertigen Kunststoff umfassen, wie z. B. Polycarbonat (PC), Polystyrol (PS), Polyethylen (PE), Polypropylen (PP) oder cyclische Olefine. Es können auch mehrere dieser Kunststoffe in einem einzigen Probenträger verwendet werden. Dabei werden insbesondere Kunststoffe bevorzugt, die mit den üblichen Methoden der Kunststoffverarbeitung (z.B. Spritzguß, hot embossing etc.) verarbeitet werden können. Da Kunststoffe einfacher als Glas zu verarbeiten sind, eignen sie sich insbesondere dann, wenn in den Träger glatte Oberflächen, Linsen, Prismen und Kombinationen daraus eingebracht werden sollen. Dies hat den Vorteil, dass keine teuren, zu reinigenden und zusammensetzbaren Glasträgerkonstruktionen verwendet werden müssen. Das aufwendige Polieren, wie es etwa bei Glas oder Kristallkomponenten nötig ist, entfällt, so dass der Probenträger günstig in hohen Stückzahlen hergestellt werden kann.

Es ist mit den integrierten optischen Komponenten möglich, den Träger so zu beleuchten, dass die Lichtstrahlen an den Trägermaterial-Luft-Grenzflächen, an den Trägermaterial-Flüssigkeits-Grenzflächen oder auch an den Grenzflächen zwischen verschiedenen Trägermaterialien teilweise reflektiert werden. Dadurch kann der Träger z. B. die Funktion eines Lichtleiters übernehmen.

Gemäß einer bevorzugten Weiterbildung aller zuvor beschriebenen Probenträger können diese wenigstens eine erste und eine zweite in den Probenträger integrierte optische Komponente umfassen, wobei ein erster Lichtweg durch die erste Komponente und ein zweiter Lichtweg durch die zweite Komponente führt. Somit kann beispielsweise auf einem ersten Lichtweg eine Ausleuchtung der Aufnahmeeinrichtung realisiert werden; ein Lichtstrahl, der den zweiten Lichtweg nimmt, kann als Referenzstrahl verwendet werden. Alternativ können auch mehrere Aufnahmeeinrichtungen mit verschiedenen Lichtstrahlen auf verschiedenen Lichtwegen ausgeleuchtet werden. Die Lichtwege müssen allerdings nicht durchgehend getrennt verlaufen. Beispielsweise kann ein Lichtstrahl an einer Stelle in den Probenträger eingekoppelt werden, innerhalb des Probenträgers geteilt werden und die resultierenden Lichtstrahlen können dann auf getrennten Lichtwegen weitergeführt werden.

Gemäß einer vorteilhaften Weiterbildung können alle zuvor beschriebenen Probenträger eine Markierung umfassen, durch die die Art des Probenträgers sowie alle integrierten optischen Komponenten gekennzeichnet werden. Bei der Verwendung eines solchen Probenträgers in einer Untersuchungsvorrichtung zur optischen Untersuchung von Proben kann dann bspw. die Untersuchungsvorrichtung die Markierung detektieren und somit den verwendeten Probenträger identifizieren.

Alle zuvor beschriebenen Probenträger sind vorzugsweise so konstruiert, dass sie in einem Standortmikroskop verwendet werden können. Dazu haben sie vorteilhafterweise eine Größe von 76 X 26 mm (± 1mm). Somit kann ein solcher Träger direkt in einem Mikroskop, z.B. in einem inversen Mikroskop, eingesetzt werden. Über einen beispielsweise auf dem Mikroskopiertisch montierten Laser (z.B. Diodenlaser) kann ein Lichtstrahl den Träger seitlich beleuchten und/oder in den Träger eingekoppelt werden. Ein von der Probe stammendes optisches Signal kann über das Mikroskopobjektiv visualisiert werden. Dabei können Filtersätze des Mikroskops verwendet werden, welche die Anregungswellenlängen des Lasers herausfiltern.

Der Probenträger weist wenigstens eine Aufnahmeeinrichtung für eine Probe auf, die insbesondere für in Flüssigkeit gelöste Proben ausgebildet ist oder auch lediglich als Träger für auf einer Oberfläche gebundene Proben ausgelegt sein kann. Als Probenaufnahme werden vorzugsweise in den Probenträger integrierte Töpfchen oder Kanäle verwendet. Dabei kann ein Kanal durch das Aufbringen einer dünnen Folie (20-500µm) auf einen Träger mit einem Graben realisiert werden. Dünne Folien haben den Vorteil, dass sie der hochauflösenden Mikroskopie zugänglich sind und wenig des emittierten Fluoreszenzsignals absorbieren. Auf einer solchen Folie können auch bestimmte Moleküle immobilisiert werden.

In einer Weiterbildung kann der Probenträger mit mehreren Aufnahmeeinrichtungen bzw. Probenaufnahmen (Kanäle, Töpfchen) versehen sein (2-300 Kanäle, 2-1000 Töpfchen). Mit Hilfe der integrierten optischen Komponenten der vorliegenden Erfindung können alle diese Probenaufnahmen beleuchtet werden. Eine Möglichkeit hierfür besteht darin, die Mehrfachreflektionen an den Flächen des Probenträgers, wie der Oberseite oder der Unterseite des Trägers, auszunützen. In einer besonderen Weiterbildung können diese Flächen dabei so geformt sein, dass der reflektierte Lichtstrahl an ihnen gebündelt oder aufgeweitet wird. Des Weiteren kann die Oberfläche des Trägers, an der der Strahl eingekoppelt wird, so ausgebildet sein, dass divergente Teilstrahlen herausgeblendet oder -gestreut werden.

Vorzugsweise könne alle Probenaufnahmen mit der gleichen Lichtintensität angeleuchtet oder beleuchtet werden. Ein optimales Ausleuchten der mit Probenflüssigkeit gefüllten Aufnahmen kann durch plankonvexe oder plankonkave Aus- bzw. Einbuchtungen erzeugt werden. Die Geometrie kann dabei so gewählt werden, das kaum Licht aus dem Träger ausgekoppelt wird.

Bei Verwendung von Licht mit verschiedenen Anregungswellenlängen kann eine Aufspaltung in verschiedene Teilstrahlen erreicht werden, indem für die integrierten optischen Komponenten in dem Probenträger Trägermaterial mit starker Dispersion verwendet wird. Je nach Dispersionsverhalten werden verschiedene Wellenlängen verschieden stark gebrochen. Somit können verschiedene Probenkanäle mit verschiedenen Wellenlängen beleuchtet werden.

Ferner können die integrierten optischen Komponenten in dem Probenträger auch polarisierende Materialien an oder in dem Träger zur Polarisation des Lichtes umfassen. Dies kann bevorzugt an der Ein- oder Auskopplungsstelle erfolgen. Insbesondere können die polarisierenden Materialien so angeordnet werden, dass sie die Funktionen eines Polarisators und Analysators übernehmen. In einer bevorzugten Ausführung liegen die so modifizierten Flächen sich gegenüber und senkrecht zum beleuchtenden Lichtstrahl. Die zu untersuchende Probe befindet sich dabei zwischen den polarisierenden Materialien. Des weiteren können auch optische Komponenten, wie sie zur Phasenkontrast- oder DIC (Differential Interference Contrast)-Mikroskopie verwendet werden, in den Träger integriert werden.

In einer bevorzugten Weiterbildung aller zuvor beschriebenen Probenträger umfasst eine der wenigstens einen integrierten optischen Komponente farbige Kunststoffe oder Folien. Diese können an bestimmten Stellen in den Träger integriert oder aufgebracht werden. Dadurch können vorbestimmte Anregungswellenlängen realisiert werden. Außerdem können bestimmte Wellenlänge herausgefiltert werden. In einer bevorzugten Ausführung ist ein solcher integrierter Filter zwischen der Probenaufnahme mit der zu untersuchenden Substanz und dem Detektionsystem angebracht.

In einem bevorzugten Verfahren zur optischen Untersuchung von Proben wird wenigstens ein für die Untersuchung der Probe erforderlicher Lichtstrahl von in den Probenträger integrierten optischen Komponenten geführt oder moduliert. Dieses Verfahren kann bei der Durchführung verschiedener eingangs bereits beschriebener Untersuchungsmethoden eingesetzt werden, wie z. B. bei Fluoreszenzuntersuchungen, der TIRF-Methode, der ATR-Methode oder der Fotoaktivierung.

### Fluoreszenzuntersuchung

Mit dem vorteilhaften Verfahren kann ein Lichtstrahl durch geeignete Anordnung von integrierten optischen Komponenten innerhalb des Probenträgers derart auf die Probenaufnahme geführt werden, dass wenigstens ein Teil des Lichtstrahl in die Probenaufnahme eindringt. Dadurch kann die Fluoreszenz in einem Flüssigkeitsvolumen bestimmt werden. Vorzugsweise können auch bestimmte vorher ausgewählte Bereiche in einer Probenaufnahme, wie z. B. einem Kanalsystem, durch das Verfahren beleuchtet werden. Hierfür wird der Lichtstrahl durch geeignete integrierten optischen Komponenten in dem Probenträger auf diese Bereiche geführt. Es ist auf diese Weise auch möglich, die Lichtabsorption einer Probe in der Probenaufnahme zu ermitteln. Dazu kann, wie beschrieben, das Licht nach dem Durchgang durch die Probe und den Träger detektiert und seine Intensität bestimmt werden. Ferner ist es möglich den Brechungsindex und somit z.B. die Salzkonzentration in einer Probe zu bestimmen, wenn das Licht mit dem erfindungsgemäßen Verfahren in eine Probenaufnahme, z. B. einen Kanal, eingekoppelt wird. Dabei wird die Brechung des Lichtes im zu untersuchenden Medium über integrierte optische Komponenten auf einen Detektor abgebildet und somit der Brechungsindex bestimmt werden.

Entsprechend einer vorteilhaften Alternative des Verfahrens kann ein Lichtstrahl auch durch geeignete integrierten optischen Komponenten in dem Probenträger geteilt werden, so dass auch mehr als zwei Strahlen zur Analyse verwendet werden können. In einer bevorzugten Variante wird der Träger dabei jedoch nur mit einem Strahl beleuchtet und dieser wird durch bestimmte Anordnung von Oberflächen am Träger oder durch Zusammenfügung verschiedener Materialien im Träger in zwei oder auch mehrere Strahlen aufgeteilt. Die verschiedenen Strahlen können auch wieder ausgekoppelt und einzeln detektiert werden. Weiter ist es möglich, Strahlen paarweise zusammenzuführen und, im Falle einer kohärenten Lichtquelle, die Phasenunterschiede mittels der Interferenzmuster zu bestimmen.

Bei einer bevorzugten Durchführung des Verfahrens könnten zwei Strahlen durch die integrierten optischen Komponenten auf gleicher optischer Weglänge durch den Träger geleitet werden, wobei einer durch das zu untersuchende Medium hindurchgeführt wird und der andere nur das Trägermaterial durchläuft. Durch Vergleich der anschließend unterschiedlichen Strahlintensitäten, können mit Hilfe dieser Methode Aussagen über die zu untersuchende Probe gemacht werden, ohne die optischen Eigenschaften des Trägermaterials berücksichtigen zu müssen. Die Verwendung von zwei Strahlen kann auch dazu verwendet werden, bei den auf der ATR-Methode beruhenden Verfahren Vergleichsmessungen zu erhalten.

In einer weiteren Durchführung können anstatt kontinuierlichem Licht, Lichtblitze verwendet werden. Die Dauer der Lichtblitze kann vorzugsweise zwischen 1 ps und 10 s liegen. Die Fluoreszenz wird dann nach Beendigung des Lichtblitzes über die Abklingzeit der Fluoreszenzanregung bestimmt. Dies hat den Vorteil, dass keine Filter benötigt werden

### TIRF-Methode

Die Verwendung des TIRF Prinzips hat den Vorteil, dass das kurzreichweitig evaneszente Feld zur Untersuchung verwendet werden kann und somit keine Streusignale aus der freien Lösung das Signal verschlechtern. Es werden ausschließlich Fluoreszenzmoleküle in der Nähe der Bodenoberfläche des Trägers durch ein evaneszentes Feld des Anregungslichtes zur Emission von Fluoreszenzsignalen angeregt, die ihrerseits von einem lichtempfindlichen Detektor quantisiert werden.

Die für TIRF erforderliche Totalreflexion innerhalb des Probenträgers wird vorzugsweise derart erreicht, dass das Beleuchtungslicht über Bereiche des Probenträgers, die als integrierte optische Komponenten ausgebildet sind, so eingekoppelt, dass es zur Totalrefektion des Lichtes an den Flächen des Trägers und der Probenaufnahme führt.

Ein besonderer Vorteil der Integration der optischen Komponenten in den Träger ist es, dass der einzukoppelnde Lichtstrahl, im Gegensatz zum Stand der Technik, nicht zuvor fokussiert oder moduliert werden muss. Es kann z.B. eine einfache Laserdiode mit starker Divergenz verwendet werden kann.

Typischerweise werden bei glasähnlichen Materialien zum einfachen Einkoppeln planare Flächen mit einem Einkoppelwinkel Winkel kleiner als 28° verwendet. Um diese Strahlengänge im Träger zu realisieren, kann die Oberfläche des Trägers in einem bestimmten Winkel zum einzukoppelnden Strahl stehen. Dieser Winkel hängt von der Orientierung des einzukoppelnden Lichtstrahls zur Oberfläche des Trägers ab, an welchem sich die zu untersuchende Substanz befindet. Vorteilhafterweise wird hier das bei bisher zur TIRF Methode verwendete Glasprisma, welches auf einen Glasträger aufgebracht wird, durch z.B. eine Anschrägung des Trägers an einer seiner Seiten ersetzt. Die zur Einkopplung des benötigten Lichtes verwendeten optischen Komponenten werden somit in den Träger integriert.

### ATR-Methode

In einer bevorzugten Ausführungsform wird bei dem bevorzugten Verfahren ein Lichtstrahl durch eine symmetrische Konstruktion des Probenträgers symmetrisch durch den Probenträger geführt. Dabei sind die Bereiche der integrierten optischen Komponenten in dem Probenträger symmetrisch zur Mittelsenkrechten des Probenträgers angeordnet. Der eingekoppelte Strahl wird nach durchlaufen des Trägers wieder ausgekoppelt. Die Intensität des ausgekoppelten Strahls kann mit der des eingekoppelten verglichen werden. Dadurch können z.B die. Verluste durch Absorption im Trägermaterial bestimmt werden. Dies ermöglicht z.B. eine Kontrolle der Qualität des Probenträgers. Bei Kenntnis der Absorption des Trägermaterials kann somit die Menge des von den Fluoreszenzmolekülen absorbieren Lichtes oder einer Belegungsdichte nach der ATR-Methode bestimmt werden.

### Fotoaktivierung

Durch die Ausnutzung der mittels des bevorzugten Verfahrens in dem Probenträger erzeugten teilweisen Reflexion oder der Totalreflexion, kann die Oberfläche in einer Probenaufnahme, vorzugsweise einem Kanal derart beleuchtet werden, dass an der Oberfläche gebundene fotoaktive Gruppen aktiviert werden. Je nach Einkopplungswinkel, Strahldurchmesser oder Strahlfokussierung können verschieden große fotoaktivierte und somit reaktive Flächen in dem Kanal geschaffen werden. Diese können bei einer entsprechenden Strahlführung durch geeignete integrierten optischen Komponenten z.B. kreisförmig, ellipsoid oder streifenförmig sein. Idealerweise wird dafür ein Material verwendet, das für die verwendete Wellenlänge hochtransparent ist.

Bei einem vorteilhaften Verfahren kann der Lichtstrahl direkt in den Kanal eingekoppelt werden, anstatt zuerst durch den Probenträger geleitet zu werden. Dabei werden Flüssigkeiten verwendet, die einen höheren Brechungsindex als das Trägermaterial aufweisen. Bei Wahl eines geeigneten Winkels kommt es an der Grenzfläche zwischen Flüssigkeit und Probenträger zur Totalreflexion. Dies hat den großen Vorteil, dass fotoaktive Oberflächen in Flüssigkeiten auf Materialien aktiviert werden können, die für das verwendete Licht nicht transparent sind oder durch das verwendete Licht zerstört werden. Bei den verwendeten Flüssigkeiten handelt es sich bevorzugt um Flüssigkeiten, die keine oder wenig Radikale abpuffern. Die Einkopplung kann dabei durch ausschließliche Verwendung der Flüssigkeit als Lichtleiter erfolgen. Es ist jedoch auch möglich, das Licht an Bereichen des Trägers, deren optische Qualität für die Untersuchung nicht relevant ist, einzukoppeln.

Dies eignet sich besonders, um in bereits bestehende Kanalstrukturen lokale oberflächenaktive Zonen zu implementieren. Dadurch wird das Problem gelöst, dass die aktiven Oberflächen bei der Herstellung der Kanalstrukturen, z.B. durch heißes Laminieren, zerstört werden. Mit dem bevorzugtenVerfahren ist es also möglich, eine Fotoaktivierung in einem bereits fertigen Probenträger zu erzeugen.

### Untersuchungsvorrichtungen

Vorzugsweise umfasst eine Untersuchungsvorrichtung zur optischen Untersuchung von Proben eine Aufnahmeeinrichtung zur Aufnahme eines der oben beschriebenen Probenträger. Der Probenträger wird in die Untersuchungsvorrichtung gelegt, welche eine Lichtquelle und einen Detektor umfasst. Die Untersuchungsvorrichtung besteht im einfachsten Fall z. B. aus einer Platte, auf der die Lichtquelle montiert ist und weist einen Halter oder eine Aussparung für den Probenträger auf. Die Lichtquelle beleuchtet den Träger vorzugsweise von der Seite. Sie kann wahlweise horizontal und vertikal justiert werden. Der Detektor kann z. B. als Detektorfeld ausgebildet sein und in der Aussparung für den Probenträger vorgesehen sein. Zwischen dem Detektorfeld und dem Träger kann ein Absorptionsfilter eingebracht werden, um die Anregungsfrequenzen herauszufiltern. In einer bevorzugten Weiterbildugn ist es möglich, über einen Drehrevolver verschiedene Absorptionsfilter zwischen Probenträger und Detektorfeld einzubringen und diese schnell zu wechseln. In einer anderen Ausführung ist das Detektorfeld nicht unter, sondern seitlich vom Träger montiert, um die Intensität, Wellenlänge und Position eines wieder ausgekoppelten Strahls zu detektieren.

Die Lichtquelle und das Detektorfeld können neben der Versorgung mit den netzüblichen Spannungen auch mit einer Batterie, einem Akku oder einer Brennstoffzelle betrieben werden. In einer bevorzugten Weiterbildung handelt es sich bei der Lichtquelle um einen Laser oder eine LED und bei dem Detektorfeld um eine Photodiode, einen CCD-Chip oder ein Spektrometer. In einer weiteren Weiterbildung kann das Detektorfeld aus mehreren (typischerweise 2-200) einzelnen Photodioden bestehen, die das Signal, welches von unterschiedlichen Stellen des Trägers stammt, messen können. Die Photodioden können auch aus farbsensitiven Photodioden bestehen. Die Signale der Photodioden können direkt auf einem im Analysegerät integrierten Display angezeigt sowie über eine Schnittstelle mit einem Computer verbunden werden. Auch die Wellenlänge, Intensität und Position der Lichtquelle können über einen Computer angesteuert werden. In einer besonderen Ausführung kann die Position, Intensität oder die Wellenlänge der Lichtquelle über eine Rückkopplungsschaltung zu den Photodioden so eingestellt werden, dass der Träger optimal ausgeleuchtet wird. Diese Rückkopplung kann über eine integrierte Elektronik oder auch ein spezielles Softwareprogramm realisiert werden.

In einer vorteilhaften Weiterbildung kann die Sensitivität der Photodioden direkt an der Untersuchungsvorrichtung oder über einen Computer variiert werden. Auch kann die Sensitivität der Photodioden ebenfalls über Rückkopplungsmechanismen mit der Stärke der Lichtquelle abgestimmt werden.

Die Probenträger der Untersuchungsvorrichtung können so markiert werden, dass sie von der Vorrichtung erkannt und vorbestimmte Parameter für die Lichtquelle und den Detektor automatisch eingestellt werden. Diese Markierungen können durch eine strukturelle Formgebung an dem Probenträger, eine bestimmte Farbgebung des Probenträgers oder einen Strichcode auf dem Probenträger gegeben sein.

Im folgenden wird die Erfindung anhand verschiedener Ausführungsbeispiele unter Bezugnahme auf die beigefügte Zeichnung beschrieben. In der Zeichnung zeigt:
Fig. 1 einen schematischer Querschnitt durch einen Probenträger,
Fig. 2a eine schematische Darstellung eines Bereichs einer integrierten optischen Komponente
Fig. 2b einen Querschnitt durch einen Probenträger einer integrierten optischen Komponente als Sammellinse,
Fig. 3 einen Querschnitt durch einen erfindungsgemäßen Probenträger mit einer stufenförmigen Struktur,
Fig. 4 einen Querschnitt durch einen Probenträger mit integrierter optischen Komponenten zur Strahlteilung,
Fig. 5 eine Detailansicht aus Figur 4,
Fig. 6a eine schematische Darstellung einer integrierten optischen Komponente zur Strahlfokussierung,
Fig. 6b eine schematische Darstellung einer integrierten optischen Komponente zur Strahlaufweitung,
Fig. 7 einen Querschnitt durch einen Probenträger mit trapezfomiger Probenaufnahme,
Fig. 8a einen Querschnitt durch einen Probenträger mit durchleuchteter Probenaufnahme,
Fig. 8b einen Querschnitt durch einen Probenträger mit durchleuchteter Probenaufnahme mit zusätzlichem Referenzstrahl und
Fig. 9 eine schematische Darstellung einer Untersuchungsvorrichtung gemäß der vorliegenden Erfindung.

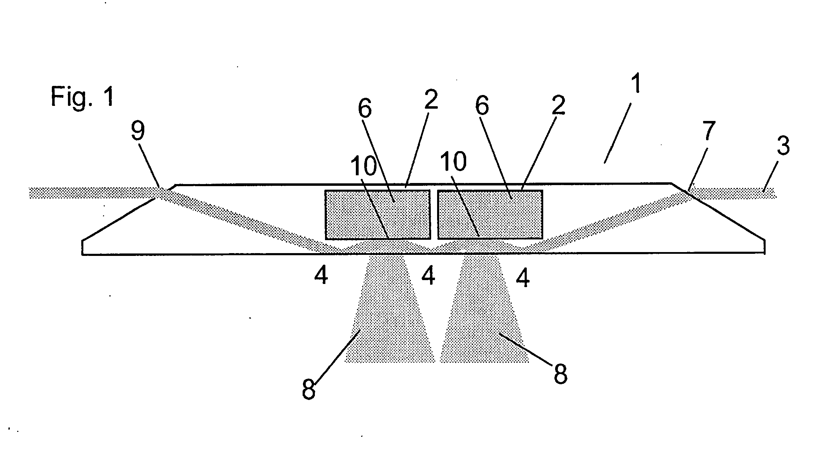

In dem teilweise dreidimensionalen schematischen Querschnitt aus Figur 1 ist ein Probenträger 1 mit einer Probenaufnahme 2 dargestellt, die aus zwei Kanälen besteht. Ein Lichtstrahl 3 verläuft durch den Probenträger 1. Dabei wird der Lichtstrahl 3 durch Ausnutzung der Totalreflektion an als integrierte optische Komponente ausgebildeten Bereichen 4 des Probenträgers 1 zur Beleuchtung verschiedener Proben 6 auf die Kanäle 2 gelenkt. Der Anregungsstahl 3 wird durch den höheren Brechungsindex des Trägermaterials an der Eingangsfläche 7 in den Probenträger 1 hineingebrochen. Ein Fluoreszenzsignal 8 von der Probe 6 kann durch ein Objektiv oder direkt auf eine Kamera oder Photodiode abgebildet werden. Bei der Probe kann es sich z. B. um am Boden der Probenaufnahme 2 gebundene Moleküle handeln. Durch eine anschließende Auskopplung des Lichtstrahl 3 an der Ausgangsfläche 9 des Probenträger 1 kann z. B. der Intensitätsverlust im Material oder durch die Absorption im oberflächennahen Bereich des evaneszenten Feldes analysiert werden. Durch diese Strahlführung können auch an der Grenzfläche 10 fotoaktive Moleküle lokal zu aktiviert werden.

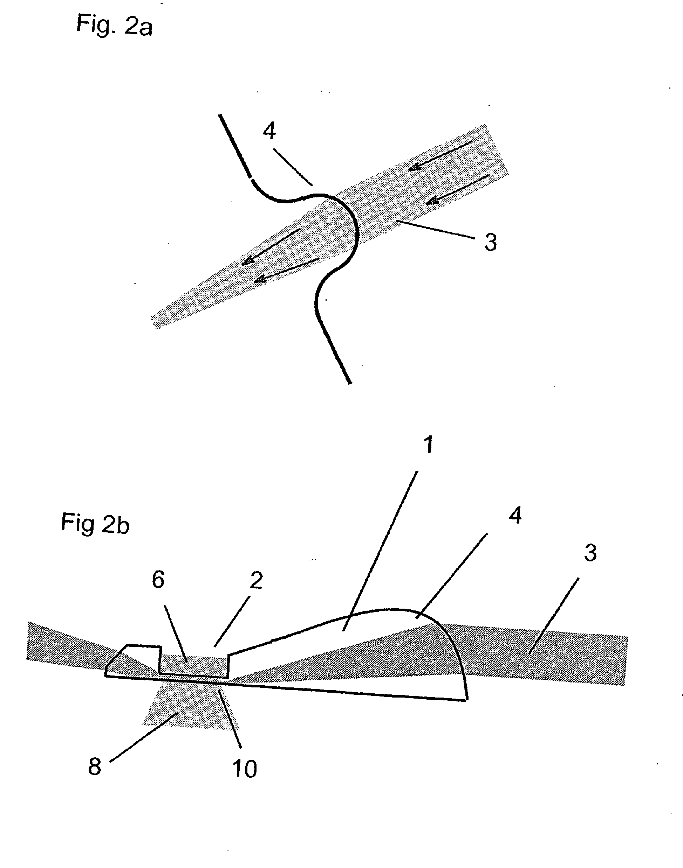

Figur 2a stellt in einem schematischen senkrechten Ausschnitt durch den Probenträger 1 eine Ausführungsform eines Bereichs 4 des Probenträgers1 dar, der als integrierte optische Komponente ausgebildet ist. Der Bereich 4 bildet eine linsenförmige Ausbuchtung im Material des Probenträgers 1 und ermöglicht dadurch eine Fokussierung des Lichtstrahls 3 im Inneren des Probenträgers. Hier ist der Strahldurchmesser kleiner als die Ausbuchtung. Im Gegensatz dazu erfüllt eine konkave Form der Ausbuchtung der Trägeroberfläche die Funktion einer Streulinse. Durch eine Aufrauhung der Oberfläche des Probenträger wird eine diffuse Beleuchtung erzielt. Auch können durch geeignete Kombinationen von planaren Flächen sowie Streu- und Sammellinsen die gleichen Effekte wie bei einer Blende erzeugt werden. Dies ist dann von Vorteil, wenn nur kleine Strahldurchmesser benötigt werden.

Der Querschnitt durch einen Probenträger 1 aus Figur 2b stellt einen Bereich 4 dar, der als integrierte großflächige Sammellinse ausgebildet ist. Der Lichtstrahl 3 kann somit auf einen bestimmten Punkt 10 im oder am Träger 1 fokussiert werden. Dies ermöglicht insbesondere die Einkopplung in einen dünnen Bereich zwischen dem Boden der Probenaufnahme 2 und der Grenzfläche des Trägers. Im Allgemeinen wird darauf geachtet, dass der Lichtstrahl 3 möglichst wenig Trägermaterial durchläuft.

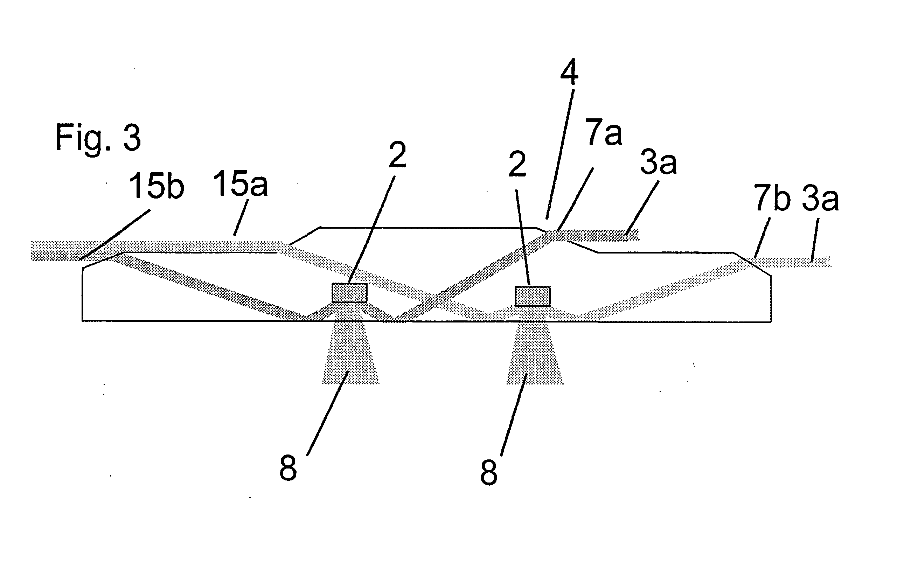

Der Querschnitt aus Figur 3 zeigt einen Probenträger 1 in einer stufenförmigen Ausbildung. Die Bereiche 4 der integrierten optischen Komponenten werden hier durch die unterschiedlichen Eingangsflächen 7a und 7b gebildet. Die Flächen können abgeschrägt sein typischerweise in einem Winkel von 65° bis 89°. Zwei Lichtstrahlen 3a und 3b werden unter zwei verschiedenen Winkeln an den Eingangsflächen 7a und 7b eingekoppelt. Der Vorteil hier ist, dass die optischen Weglängen im Trägermaterial gleich lang sind. Dadurch ist die Absorption des Lichtes durch das Trägermaterial zwischen Einkopplungsstelle und Beleuchtungsstelle für alle zu untersuchenden Stellen identisch, also quantitativ vergleichbar, und somit sind auch die Lichtintensitäten am Boden der Probenaufnahme 2 identisch. Vorzugsweise werden auch hier die Eingangsflächen 7a und 7b an der Einkopplungsstelle so gestaltet, dass die Probenaufnahmen 2 homogen ausgeleuchtet werden können. Das emittierte Fluoreszenzsignal 8 und die wieder ausgekoppelte Lichtstrahlen 15a und 15b können detektiert werden.

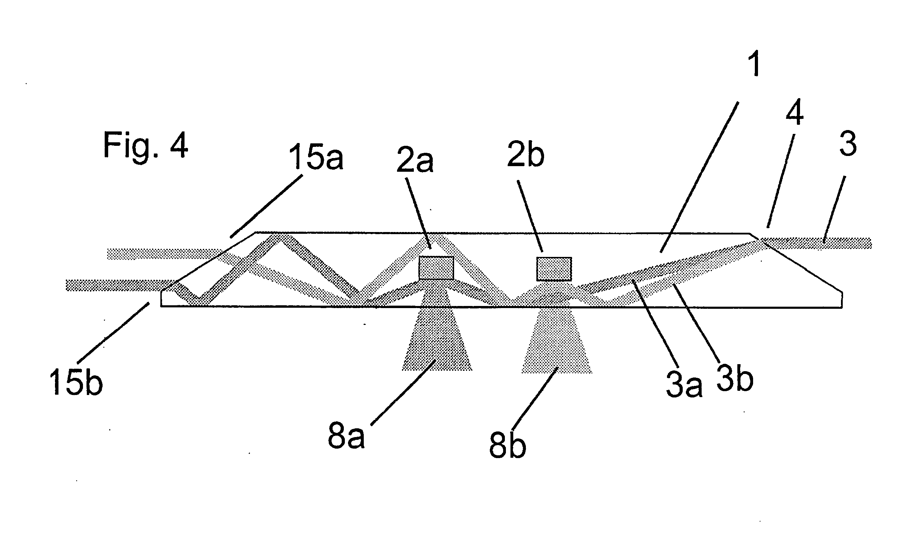

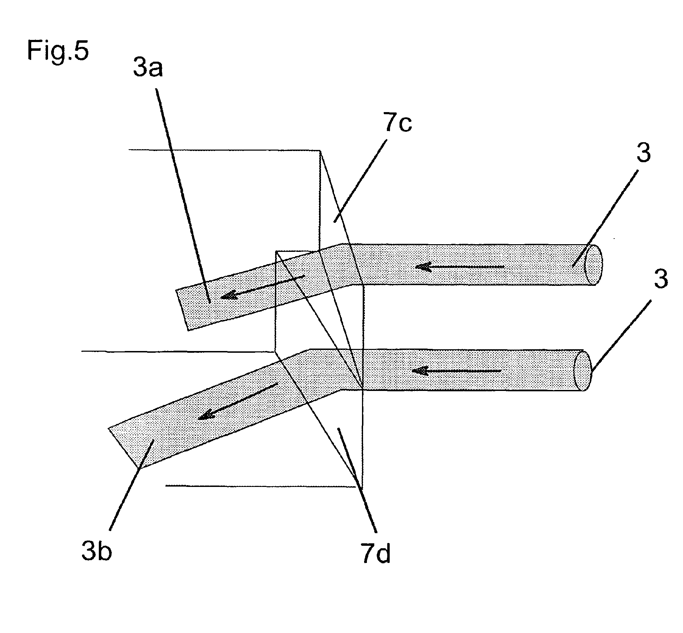

Der schematische Querschnitt aus Figur 4 durch einen Probenträger 1 zeigt die Aufteilung eines Lichtstrahls 3 in zwei Teilstrahlen. Der als integrierte optische Komponente eingesetzte Bereich 4, an dem der Lichtstrahl in den Probenträger eintritt, ist in der dreidimensionalen Figur 5 im Detail gezeigt. Durch die Ausbildung zweier Eingangsflächen 7c und 7d mit unterschiedlicher Schräge im Bezug zum einfallenden Lichtstrahl 3 erfolgt die Aufteilung des Strahls. Zudem kann auch in diesem Bereich der integrierten optischen Komponente die Dispersion des Materials ausgenutzt werden. Mit Hilfe einer derartigen integrierten optischen Komponente können zwei verschiedene oder gleiche Proben 6 in zwei verschiedenen Kanälen 2a und 2b separat z. B. mit verschiedenen Wellenlängen beleuchtet werden. Die Emissionsignale 8a und 8b können anschließend detektiert werden. Hier ist aus Gründen der Übersichtlichkeit nur eine Emissionsrichtung dargestellt. Ferner können die verschiedenen Teilstrahlen durch Modifikationen an der Trägeroberfläche unter unterschiedlichen, ortsabhängigen Winkeln reflektiert werden.

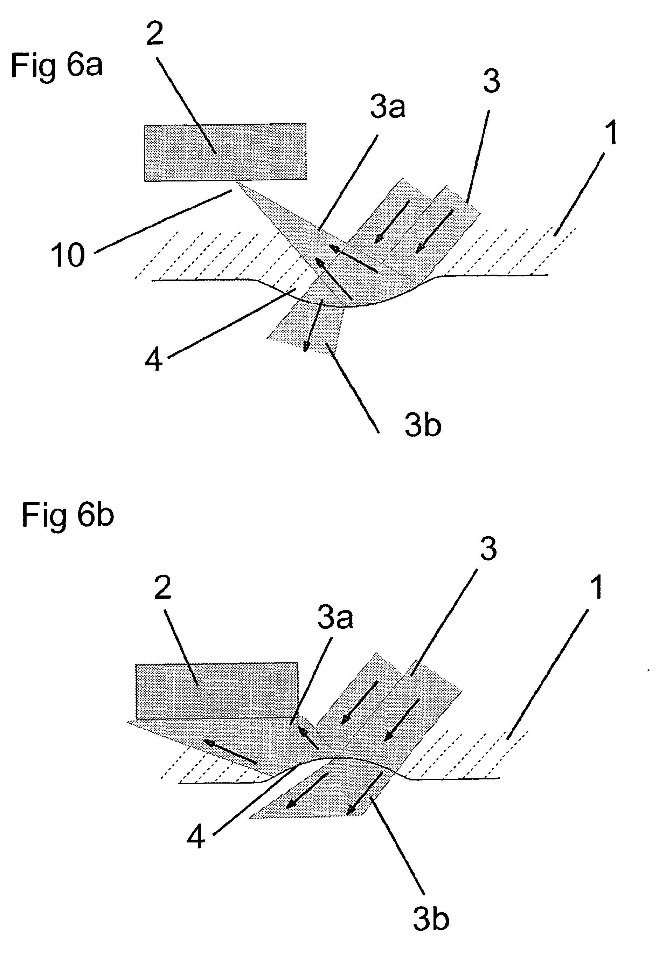

Die Figuren 6a und 6b zeigen die Strahlenführung, bzw. Modulation durch integrierte optische Komponenten im Inneren des Probenträger 1. Im dargestellten Beispiel ist der Verlauf und die Änderung des Lichtstrahl 3 unter dem Einfluß von einer kreis- oder linsenförmiegen Ausgestaltung der Grenzfläche zwischen dem Probenträger 1 und der Luft gezeigt. Durch den Bereich 4 in Form einer Ausbuchtung der Trägeroberfläche, wie in Figur 6a, wird ein Teilstrahl 3a des Lichtstrahls 3 auf einen Punkt 10 der Probenaufnahme 2 fokussiert, wobei das Trägermaterial einen höheren Brechungsindex als die umgebende Luft aufweist. In der Probenaufnahme 2 können dann fluoreszierende Moleküle mit einer hohen Intensität gemessen werden. Ein Teilstrahl 3b, welcher unter einem niedrigeren Winkel als für die Totalreflexion nötig auf die Grenzfläche trifft, wird aus dem Probenträger 1 ausgekoppelt.

Bei einem Bereich 4, der als Einbuchtung in dem Probenträger 1 ausgebildet ist, wird der nicht ausgekoppelte Teilstrahl 3a reflektiert und aufgeweitet, wie in Figur 6b gezeigt ist. Dadurch ist eine homogene Beleuchtung der Probenaufnahme 2, d. h. des Kanalbodens gegeben. Der Teilstrahl 3b , welcher unter einem niedrigeren Winkel als für die Totalreflexion nötig auf die Grenzfläche trifft, wird ausgekoppelt. Um ein Auskoppeln des Strahles zu verhindern, können die Aus- und Einbuchtungen so konzipiert werden, dass der kritische Winkel zur Totalreflexion nicht überschritten wird. Es ist auch möglich, den Lichtstrahl derart in den Träger eingzukoppeln, dass nur der Bereich der Ein- und Ausbuchtungen beleuchtet wird, bei dem die Totalreflexion gewährleistet ist.

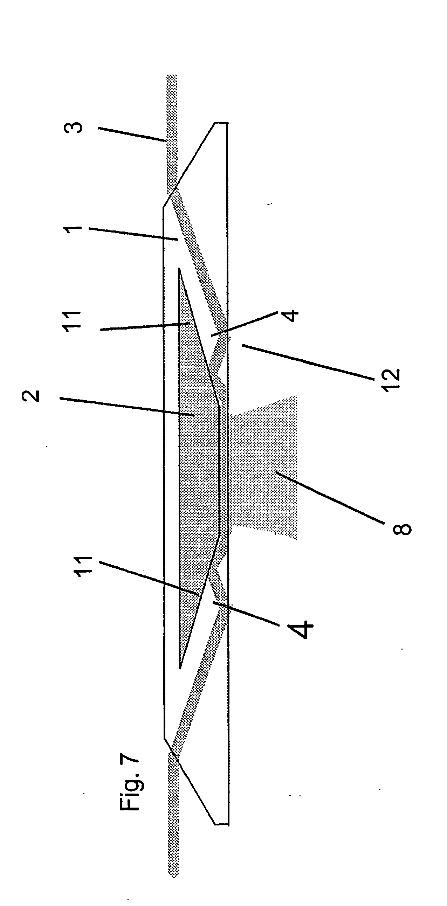

Figur 7 zeigt eine mögliche Ausführungsform von Bereichen 4 des Probenträger 1 als integrierte optische Komponenten, welche eine Einkopplung in einen dünnen Bodenbereich ermöglichen. Dabei dienen die schrägen Flächen 11 der Probenaufnahme 2 der Reflexion des Lichtstrahl 3. Die Flächen 11 bilden mit derTrägergrundfläche 12 eine langsam verlaufende Verjüngung zum Bodenbereich hin. Im einfachsten Fall hat wird hat die Probenaufnahme 2 dann ein trapezförmiges Profil.

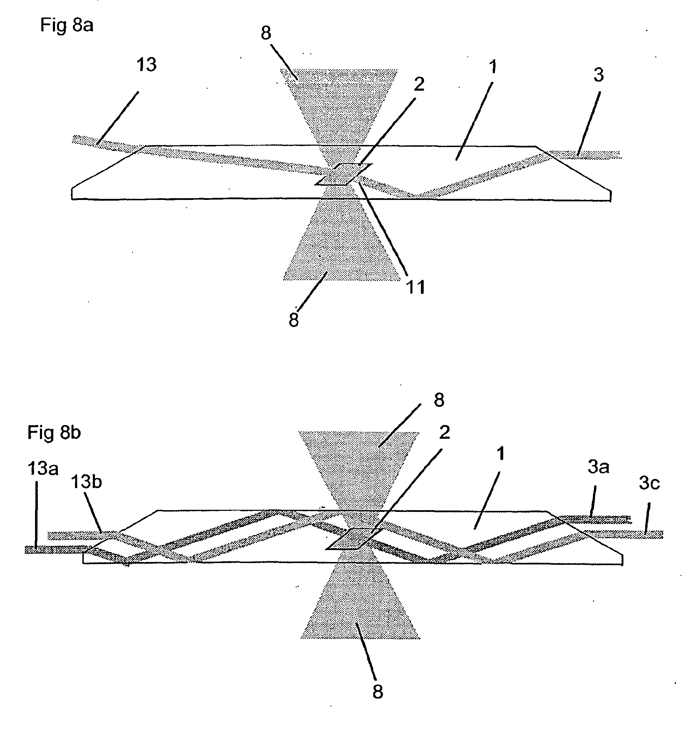

Die Figuren 8a und 8b zeigen einen Probenträger 1 bei dem durch die entsprechenden integrierten optischen Komponenten der Lichtstrahl 3 und 3a in den Träger eingekoppelt, jedoch nicht an der Oberfläche zur Probenaufnahme 2 reflektiert wird, sondern in die Aufnahme einkoppelt. Eine solche integrierte optische Komponente ist dadurch gegeben, dass die Grenzfläche 11 der Probenaufnahme 2 eine geeignete Anschrägung aufweist. Es ist jedoch auch möglich, dieses Prinzip in einem Träger mit einem offenen Reservoir anzuwenden. Es wird die gesamte Probe in der Probenaufnahme 2 beleuchtet und die Fluoreszenzsignale 8 können detektiert werden. Auch ist es möglich, die Intensität eines ausgehenden Strahls 13 zu messen. Dies gibt Aufschluß über die Absorption des Lichtes in der Probe. Der Lichtstrahl wird zudem in der Probe in Abhängigkeit von dem Brechungsindex der Probe gebrochen. Diese Brechung kann anhand der Position von Ausgangsstrahl 13 detektiert werden, z. B. durch eine ortsaufgelöste Photodiode.

Wie in Figur 8b gezeigt, kann auch ein Referenzstrahl 3c mit gleicher optischer Weglänge eingekoppelt werden, um Absorbtionseffekte des Trägermaterials zu berücksichtigen. Dieser kann ebenfalls detektiert werden. Die integrierten optischen Komponenten an den Oberflächen, durch die der Strahl in dem Träger total zurückreflektiert wird, können zusätzlich durch geeignete Krümmungen oder Rauhigkeiten so modifiziert sein, daß der Strahl fokussiert, gebündelt oder aufgeweitet wird.

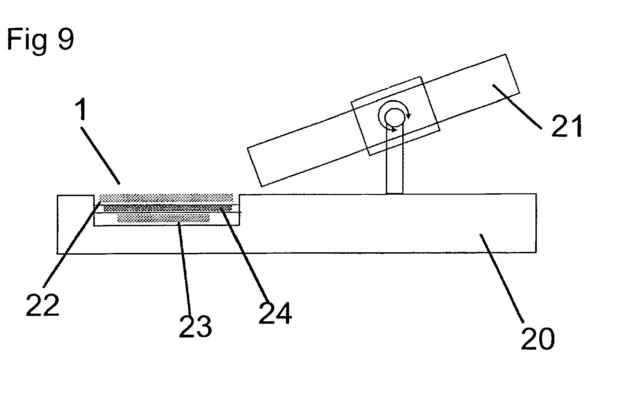

In Figur 9 ist eine Vorrichtung zur optischen Untersuchung von Proben gezeigt, die auf einer Platte 20 einen Laser 21, eine Aussparung 22 für einen Probenträger 1 und ein Detektorfeld 23 unterhalb dem Probenträger 1 in der Aussparung 22 aufweist. Zwischen dem Probenträger 1 und dem Detektorfeld 23 ist ein Absorptionsfilter 24 eingebracht. Über den Laser 21 wird der Probenträger 1 beleuchtet. Das emittierte Signal kann über den Filter 24 gereinigt werden und durch das Detektorfeld aufgenommen werden. Der Laser kann auch in die Vorrichtung implementiert sein. Weitere optische Komponenten sind für diese Untersuchungsvorrichtung nicht erforderlich, da die Funktionen verschiedener optischer Komponenten durch geeignete Bereiche in dem Probenträger 1 erfüllt werden können.

Die Erfindung und bevorzugte Weiterbildungen werden durch die beigefügten Ansprüche beschrieben.

## Patentansprüche

1. Probenträger für optische Untersuchungen mit wenigstens einer Aufnahmeeinrichtung für eine Probe und wenigstens einer in den Probenträger integrierten optischen Komponente zur Führung und/oder Modulation eines Lichtstrahls, wobei eine der wenigstens einen integrierten optischen Komponente durch eine stufenförmige Ausgestaltung des Probenträgers ausgebildet ist und einen ebenen Bereich einer Seitenfläche des Probenträgers umfasst, wobei der Normalenvektor des ebenen Bereichs auf dem Normalenvektor der Probenträgergrundfläche nicht senkrecht steht.

2. Probenträger nach Anspruch 1, in welchem eine der wenigstens einen integrierten optischen Komponente als Linse, Prisma, Spiegel, Polarisator, Blende, Strahlteiler, Lichtfilter oder Lichtleiter ausgebildet ist.

3. Probenträger nach einem der vorangegangenen Ansprüche, in welchem eine weitere der wenigstens einen integrierten optischen Komponente durch eine Wölbung der Oberfläche ausgebildet ist.

4. Probenträger nach einem der vorangegangenen Ansprüche, in welchem eine der wenigstens einen integrierten optischen Komponente als die wenigstens eine Aufnahmeeinrichtung ausgebildet ist.

5. Probenträger nach einem der vorangegangenen Ansprüche, in welchem eine der wenigstens einen Aufnahmeeinrichtung eine Verjüngung in Richtung der Grundfläche des Probenträgers aufweist.

6. Probenträger nach einem der vorangegangenen Ansprüche, in welchem eine der wenigstens einen Aufnahmeeinrichtung wenigstens einen fotoaktiven Bereich umfasst.

7. Probenträger nach einem der vorangegangenen Ansprüche, in welchem eine der wenigstens einen integrierten optischen Komponente mindestens zwei Materialien umfasst.

8. Probenträger nach einem der vorangegangenen Ansprüche, in welchem ein Material einer der wenigstens einen integrierten optischen Komponente Polycarbonat, Polystyrol, Polyethylen, Polypropylen, und/oder cyclische Olefine umfasst.

9. Probenträger nach einem der vorangegangenen Ansprüche mit wenigstens einer ersten und einer zweiten in den Probenträger integrierten optischen Komponente, wobei ein erster Lichtweg durch die erste Komponente und ein zweiter Lichtweg durch die zweite Komponente führt.

10. Probenträger nach einem der vorangegangenen Ansprüche mit einer Markierung, durch die die Art des Probenträgers sowie die integrierten optischen Komponenten **gekennzeichnet** werden.

11. Probenträger nach einem der vorangegangenen Ansprüche, in welchem eine der wenigstens einen integrierten optischen Komponente als eine Aufrauhung ausgebildet ist.

## Claims

1. Sample carrier for optical analyses, comprising at least one receiving device for a sample and at least one optical component integrated in the sample carrier for guiding and/or modulating a light beam, wherein one of the at least one integrated optical components is formed by a stepped configuration of the sample carrier and comprises a flat region of a side surface of the sample carrier, the normal vector of the flat region not being perpendicular to the normal vector of the sample carrier base surface.

2. Sample carrier according to claim 1, in which one of the at least one integrated optical components is designed as a lens, prism, mirror, polariser, diaphragm, beam splitter, light filter or light guide.

3. Sample carrier according to one of the preceding claims, in which another of the at least one integrated optical components is formed by a curvature of the surface.

4. Sample carrier according to one of the preceding claims, in which one of the at least one integrated optical components is designed as the at least one receiving device.

5. Sample carrier according to one of the preceding claims, in which one of the at least one receiving devices is tapered in the direction of the base surface of the sample carrier.

6. Sample carrier according to one of the preceding claims, in which one of the at least one receiving devices comprises at least a photo-active region.

7. Sample carrier according to one of the preceding claims, in which one of the at least one integrated optical components comprises at least two materials.

8. Sample carrier according to one of the preceding claims, in which a material of one of the at least one integrated optical components comprises polycarbonate, polystyrene, polyethylene, polypropylene and/or cyclic olefins.

9. Sample carrier according to one of the preceding claims, comprising at least a first and a second optical component integrated in the sample carrier, wherein a first light path passes through the first component and a second light path passes through the second component.

10. Sample carrier according to one of the preceding claims, comprising a marking which serves to identify the type of sample carrier and also the integrated optical components.

11. Sample carrier according to one of the preceding claims, in which one of the at least one integrated optical components is designed as a roughened section.

## Revendications

1. Porte-échantillon pour des analyses optiques, avec au moins un dispositif de réception pour un échantillon, et au moins un composant optique qui est intégré dans le porte-échantillon et qui est destiné à guider et/ou moduler un faisceau lumineux, l'un des composants optiques intégrés étant formé grâce à une forme étagée du porte-échantillon et comprenant une zone plane d'une surface latérale dudit porte-échantillon, et le vecteur normal de la zone plane sur le vecteur normal de la surface de base du porte-échantillon n'étant pas perpendiculaire.

2. Porte-échantillon selon la revendication 1, dans lequel l'un des composants optiques intégrés est conçu comme une lentille, un prisme, un miroir, un polarisateur, un diaphragme, un séparateur de faisceau, un filtre de lumière ou un conducteur de lumière.

3. Porte-échantillon selon l'une des revendications précédentes, dans lequel un autre composant optique intégré est formé grâce à un bombement de la surface.

4. Porte-échantillon selon l'une des revendications précédentes, dans lequel l'un des composants optiques intégrés est formé par le ou les dispositifs de réception.

5. Porte-échantillon selon l'une des revendications précédentes, dans lequel l'un des dispositifs de réception présente une partie effilée en direction de la surface de base du porte-échantillon.

6. Porte-échantillon selon l'une des revendications précédentes, dans lequel l'un des dispositifs de réception comprend une zone photoactive.

7. Porte-échantillon selon l'une des revendications précédentes, dans lequel l'un des composants optiques intégrés comporte au moins deux matériaux.

8. Porte-échantillon selon l'une des revendications précédentes, dans lequel un matériau de l'un des composants optiques intégrés comprend du polycarbonate, du polystyrène, du polyéthylène, du polypropylène et/ou des oléfines cycliques.

9. Porte-échantillon selon l'une des revendications précédentes, avec au moins un premier et un second composant optique intégré dans le porte-échantillon, un premier trajet optique traversant le premier composant, et un second trajet optique traversant le second composant.

10. Porte-échantillon selon l'une des revendications précédentes, avec un marquage grâce auquel le type du porte-échantillon et les composants optiques intégrés sont identifiés.

11. Porte-échantillon selon l'une des revendications précédentes, dans lequel l'un des composants optiques intégrés est conçu comme une surface rugueuse.
